(19) Europäisches Patentamt

European Patent Office

Office européen des brevets

(11) **EP 1 256 702 A2**

(12) **EUROPÄISCHE PATENTANMELDUNG**

(43) Veröffentlichungstag:
**13.11.2002 Patentblatt 2002/46**

(51) Int Cl.⁷: **F02B 37/12**, F02B 39/16

(21) Anmeldenummer: **02004803.9**

(22) Anmeldetag: **02.03.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **08.05.2001 DE 10122293**

(71) Anmelder: **AUDI AG**
**85045 Ingolstadt (DE)**

(72) Erfinder: **Weinreuter, Bernhard**
**74906 Bad Rappenau (DE)**

(54) **Verfahren zur Regelung einer Ladedruckbegrenzung eines Turboladers bei einem Verbrennungsmotor in Abhängigkeit von der Dichte der Umgebungsluft**

(57) Die Erfindung betrifft ein Verfahren zur Regelung einer Ladedruckbegrenzung eines Turboladers bei einem Verbrennungsmotor in Abhängigkeit von der Dichte der Umgebungsluft, wobei nach vorgegebenen Zeitintervallen die ermittelten Größen für die Ist-Umgebungstemperatur $T_\infty$, für den Ist-Umgebungsdruck $p_\infty$, für die angesaugte Luftmasse $m_L$ und für den Ladedruck $p_L$ in diesem Betriebszustand ermittelt und aus diesen Größen über vorbestimmte luftmassenabhängige Korrekturkennlinien der Ist-Druck $p_{VE}$ am Verdichtereintritt und die Ist-Temperatur $T_{VE}$ am Verdichtereintritt ermittelt wird, wobei aus ermitteltem Druck $p_{VE}$ am Verdichtereintritt, aus ermittelter Temperatur $T_{VE}$ am Verdichtereintritt und aus ermittelter angesaugter Luftmasse $m_L$ jeweils der auf Normbedingungen des Verdichters korrigierte Luftmassendurchsatz $m_{Lkor}$ am Verdichtereintritt ermittelt wird, wobei jeweils aus dem Verdichterkennfeld für die maximal zulässige Turboladerdrehzahl $n_{Vmax}$ bei diesem auf Normbedingungen des Verdichters korrigierten Luftmassendurchsatz $m_{Lkor}$ am Verdichtereintritt und dem ermittelten Umgebungsdruck $p_\infty$ der verdichterdrehzahlabhängige maximal zulässige Ladedruck $p_{Lmaxkor}$ entnommen und mit dem in diesem Betriebszustand ermittelten Ladedruck $p_{List}$ verglichen wird, und wobei der Ladedruck so geregelt wird, dass der ermittelte Wert für den Ladedruck $p_{List}$ jeweils maximal dem in diesem Zustand ermittelten verdichterdrehzahlabhängigen maximal zulässigen Ladedruck $p_{Lmaxkor}$ entspricht.

FIG.1

EP 1 256 702 A2

**Beschreibung**

Die Erfindung betrifft ein Verfahren zur Regelung einer Ladedruckbegrenzung eines Turboladers bei einem Verbrennungsmotor in Abhängigkeit von der Dichte der Umgebungsluft, einen Verbrennungsmotor mit Abgasturbolader und mit einer Regeleinrichtung zur Regelung des Ladedrucks, bei der nach bestimmten Zeitintervallen jeweils der Ist-Ladedruck ermittelt und mit vorgegebenen Werten für den Soll-Ladedruck im jeweiligen Betriebszustand aus einem gespeicherten Verdichterkennfeld verglichen und nachgeregelt wird sowie ein Motorsteuerungsgerät für einen Verbrennungsmotor mit Abgasturbolader mit einer Regeleinheit zur Regelung des Ladedrucks und einer Datenspeichereinheit.

Es ist bekannt , den Ladedruck bei einem Verbrennungsmotor mit Turbolader zu regeln. So ist beispielsweise aus der DE 197 57 661 C1 eine Ladedruckregelung bei einem Verbrennungsmotor mit Turbolader bekannt, bei der ein gewünschter Sollladedruck einem motordrehzahl- und lastabhängigen Kennfeld entnommen und zur Regelung instationäre Beeinflussungen aufgrund dynamischen Fahrverhaltens berücksichtigt werden.

Sobald die Laderdrehzahl einen maximal zulässigen Grenzwert für die Laderdrehzahl überschreitet, kann ein Turbolader beschädigt werden. Ein solches Überdrehen kann erfolgen, wenn das Fahrzeug in größere Höhen fährt, in denen der Umgebungsdruck unter einen bestimmten Minimaldruck fällt oder sich die Schlucklinie des Motors in Folge von Systemundichtheiten stark ändert. Um ein Überdrehen des Turboladers beim Fahren in der Höhe zu vermeiden, wird üblicherweise die Drehzahl des Laders durch Begrenzung des Ladedrucks in Abhängigkeit von der Motordrehzahl und dem Atmosphärendruck begrenzt. Dies erfolgt über zuvor aufgenommene Kennfelder, in denen der Ladedruck in Abhängigkeit vom Umgebungsdruck und der Motordrehzahl abgelegt ist. Hierzu müssen zu jedem Motor mit Turbolader zuvor für jede Höhe aufwendige Tests zur Erstellung der Kennfelder aufgenommen werden. Ferner müssen Schwankungen im Luftdruck und der Umgebungstemperatur bei der Auslegung vorgehalten werden.

Der Erfindung liegt das Problem zugrunde, unter Berücksichtigung der atmosphärischen Gegebenheiten trotz hoher Leistung ein Überdrehen des Turboladers bei einem Verbrennungsmotor mit Turbolader einfach und zuverlässig zu begrenzen.

Erfindungsgemäß gelöst wird das Problem sowohl durch das Verfahren zur Regelung einer Ladedruckbegrenzung eines Turboladers bei einem Verbrennungsmotor in Abhängigkeit von der Dichte der Umgebungsluft gemäß den Merkmalen von Anspruch 1, als auch durch die Ausbildung eines Verbrennungsmotors mit Abgasturbolader und mit einer Regeleinrichtung zur Regelung des Ladedrucks, bei der nach bestimmten Zeitintervallen jeweils der Ist-Ladedruck ermittelt und mit vorgegebenen Werten für den Soll-Ladedruck im jeweiligen Betriebszustand aus einem gespeicherten Verdichterkennfeld verglichen und eingeregelt wird, gemäß den Merkmalen von Anspruch 9 sowie durch ein Motorsteuerungsgerät für einen Verbrennungsmotor mit Abgasturbolader mit einer Regeleinheit zur Regelung des Ladedrucks und einer Datenspeichereinheit gemäß den Merkmalen von Anspruch 10.

Hierdurch wird in einfacher Weise unter Berücksichtigung der atmosphärischen Bedingungen zu jedem Ermittlungszeitpunkt der von den atmosphärischen Bedingungen abhängige Ladedruck ermittelt und dieser mit dem der für diesen Betriebszustand maximal zulässigen Laderdrehzahl entsprechenden maximal zulässigen Ladedruck verglichen. Ohne aufwendige Vorversuche zur Ermittlung eines Kennfeldes für jeden einzelnen Umgebungszustand kann somit direkt durch Vergleich des gemessenen Ladedrucks mit dem aus einem Kennfeld entnommenen maximal zulässigen Ladedruck zuverlässig festgestellt werden, ob die Verdichterdrehzahl noch unterhalb der Grenze zum Überdrehen liegt und bei Erreichen des Grenzzustandes entsprechend ein weiterer Anstieg verhindert wird.

Bevorzugt ist das Verfahren gemäß den Merkmalen von Anspruch 2, bei dem der korrigierte Luftmassendurchsatz am Verdichtereintritt in sehr guter Annäherung ermittelt werden kann.

Das Verfahren gemäß den Merkmalen von Anspruch 3 ermöglicht in einfacher Weise Regelung und Ladedruckbegrenzung durch das üblicherweise ohnehin bereits baulich vorhandene Motorsteuergerät, in dem alle vorbestimmten Daten vorliegen, dem alle gemessenen Daten mit entsprechenden Eingängen erst zugeleitet werden und von dem über einen Ausgang entsprechende Steuersignale zur Ladedruckregelung weitergeleitet werden können.

Das Verfahren gemäß den Merkmalen von Anspruch 4 ermöglicht eine besonders genaue Ermittlung des tatsächlich vorhandenen Druckverhältnisse $P_L/P_{VE}$ durch Berücksichtigung der Druckverluste zwischen Messstelle und Verdichtereintritt. Hierdurch ist es möglich, die Sicherheiten zwischen maximal zulässiger Verdichterdrehzahl und ermittelter Verdichterdrehzahl weiter zu minimieren. Das Leistungsspektrum des Motors kann auf diese Weise gerade in größeren Höhen erweitert werden.

Bevorzugt ist das Verfahren gemäß den Merkmalen von Anspruch 5, mit dem die Gefahr des kurzfristigen Auftretens von Ladedruckspitzen, die über dem maximal zulässigen Ladedruck liegen und somit das Auftreten von kurzfristigen Verdichterdrehzahlspitzen, die über dem maximal zulässigen Wert für die Verdichterdrehzahl liegen, aufgrund von dynamischen Vorgängen zusätzlich minimiert werden kann. Ein Überdrehen des Verdichters aufgrund von dynamischen Vorgängen und hierdurch erzeugten Drehzahlspitzen kann somit in einfacher Weise vermieden werden.

Die Ansprüche 6 bis 8 stellen besonders vorteilhafte Verfahren zur Regelung einer Ladedruckbegrenzung dar.

Die Erfindung wird im Folgenden anhand der in den Figuren 1 bis 3 dargestellten Ausführungsbeispiele näher erläutert. Hierin zeigen:

Figur 1    Schematische Darstellung eines Verbrennungsmotors mit Turbolader;

Figur 2    Regeldiagramm zur Darstellung der Regelung einer erfindungsgemäßen Ladedruckbegrenzung;

Figur 3    qualitative Darstellung eines Verdichterkennfeldes

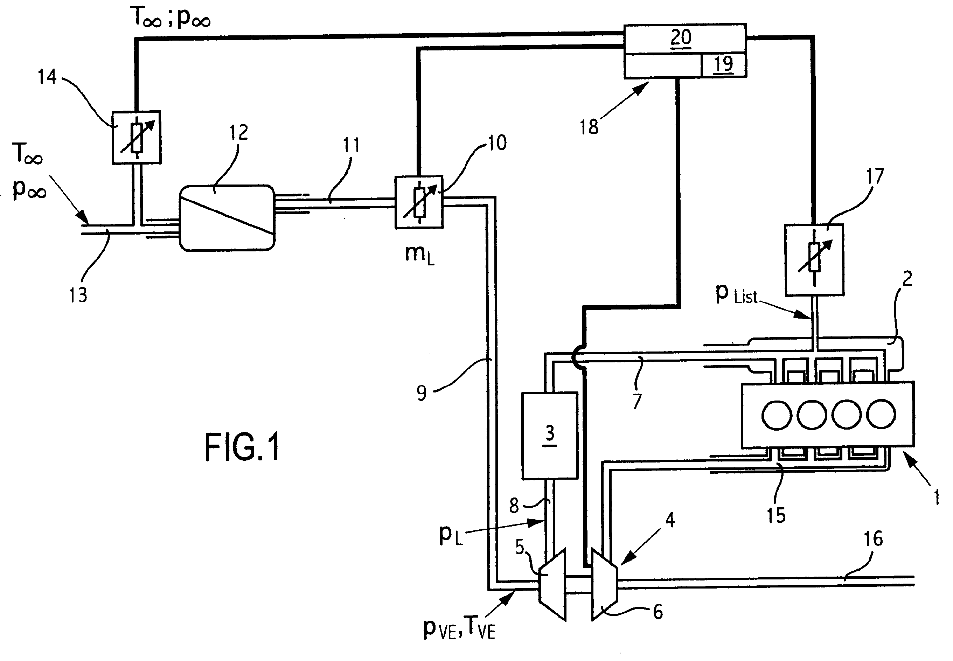

Figur 1 zeigt einen Verbrennungsmotor 1, dem in bekannter Weise über ein Saugrohr 2 die über einen Turbolader 4 aufgeladene Ladeluft zugeführt und von dem über eine Abgasführung 15 die Abgase - soweit eine Aufladung gewünscht ist - zur Turbine 6 des Turboladers 4 abgeleitet werden. Bei Einsatz des Turboladers 4 wird dabei die Turbine 6 des Turboladers 4 von den Abgasen unter Entspannung angetrieben und die Abgase werden von der Turbine 6 in bekannter Weise über eine Abgasführung 16 abgeleitet. Die Turbine 6 des Turboladers 4 treibt in bekannter Weise den Verdichter 5 des Turboladers an, wodurch die über eine Luftführung 13 durch einen Luftfilter 12, eine Luftführung 11, einen Luftmassenmesser 10 und eine Luftführung 9 angesaugte Luft aufgeladen wird und in diesem aufgeladenen Zustand durch eine Luftführung 8, einen Ladeluftkühler 3, einer Luftführung 7, dem Saugrohr 2 und somit dem Motor 1 in bekannter Weise zugeführt wird. Die Aufladung der Ladeluft durch den Turbolader 4 wird in bekannter, herkömmlicher und nicht weiter dargestellter Weise entsprechend den gewünschten Leistungsanforderungen geregelt.

Zur Begrenzung der Laderdrehzahl zwecks Verhinderung eines Überdrehens des Turboladers aufgrund veränderter atmosphärischer Bedingungen, beispielsweise in größeren Höhen, wird in regelmäßigen, vorbestimmten Zeitintervallen über einen Luftdruck- und Lufttemperatursensor 14 die Umgebungstemperatur $T_\infty$ und der Umgebungsdruck $P_\infty$ und über den Luftmassenmesser 10 die angesaugte Luftmasse $m_L$ und über einen Ladedruck- und Ladelufttemperatursensor 17 der Ladedruck $p_{List}$ in diesem Betriebszustand gemessen. Die Messdaten werden zur Berechnungseinheit 20 des Motorsteuergeräts 18 übertragen. In einem Datenspeicher 19 bekannter Art des Motorsteuergeräts 18 ist das für den Turbolader 4 spezifische Verdichterkennfeld gespeichert.

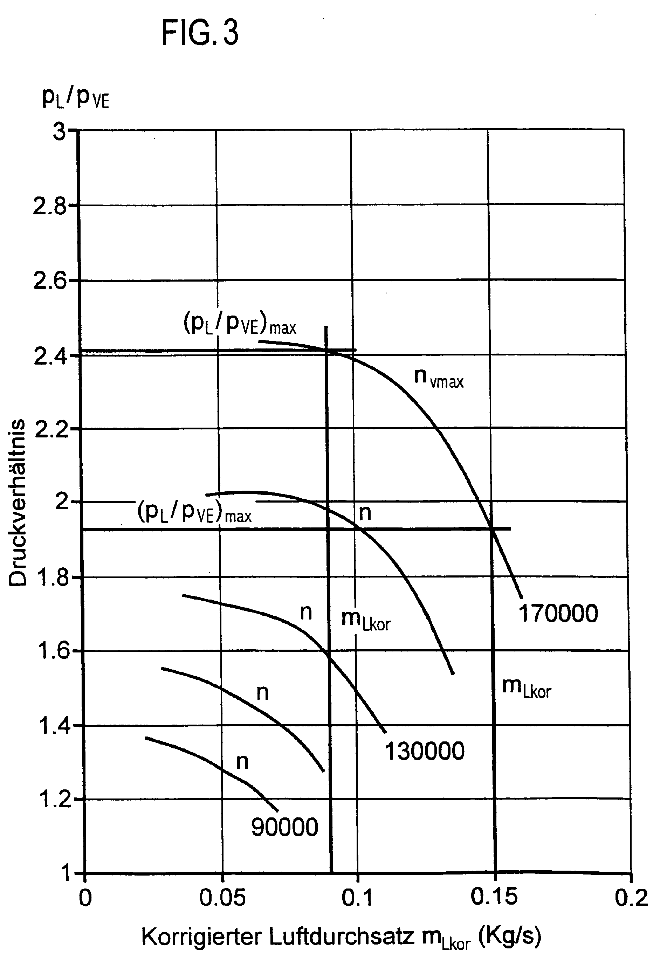

Wie aus Figur 3 zu erkennen ist, sind in diesem spezifischen Verdichterkennfeld unter anderem die Kennlinie der maximal zulässigen Verdichterdrehzahl $n_{vmax}$ in Abhängigkeit von der angesaugten, auf Normzustand des Verdichters korrigierten Luftmasse $m_{Lkor}$ und dem Druckverhältnis aus Ladedruck nach Verdichter $p_L$ zu Druck vor Verdichter $P_{VE}$ dargestellt.

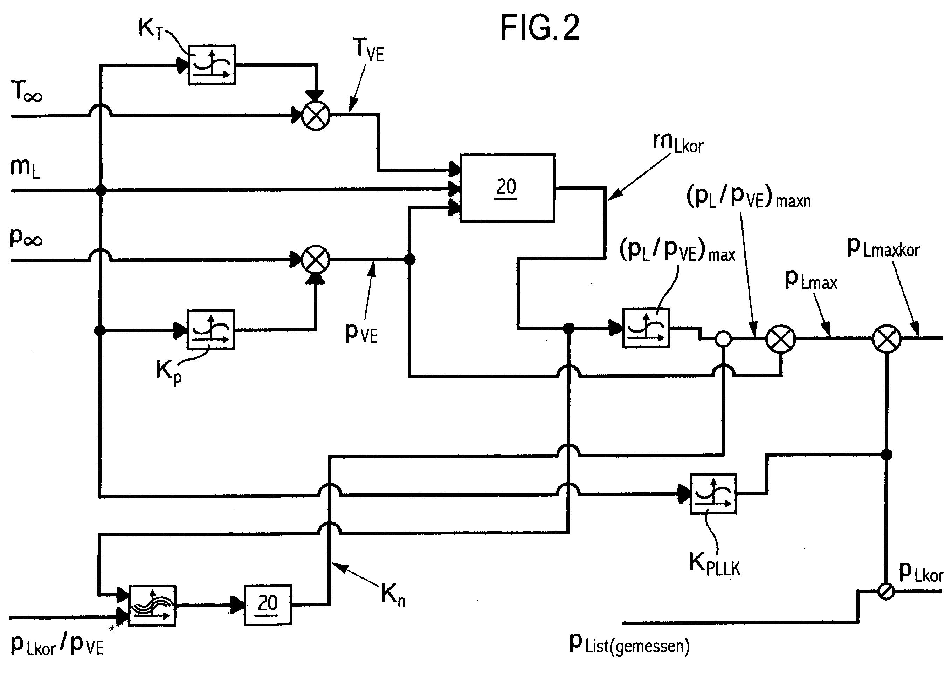

Wie in Figur 2 zu erkennen ist, wird in der Recheneinheit 20 des Motorsteuergeräts 18 aus der Umgebungstemperatur $T_\infty$ unter Berücksichtigung einer abgespeicherten, vorbestimmten, luftmassenabhängigen Korrekturkennlinie $K_T$ die Temperatur am Verdichtereintritt $T_{VE}$ ermittelt und ebenso aus dem Umgebungsdruck $P_\infty$ unter Heranziehung einer gespeicherten, vorbestimmten, luftmassenabhängigen Korrekturkennlinie $K_P$ der Druck am Verdichtereintritt $p_{VE}$ ermittelt.

Die Korrekturkennlinien $K_T$ und $K_P$ können beispielsweise in Form von luftmasseabhängigen Korrekturfaktoren abgespeichert vorliegen. Anschließend erfolgt in der Recheneinheit 20 eine Berechnung des auf Normbedingungen korrigierten Luftmassendurchsatzes am Verdichtereintritt $m_{Lkor}$ aus dem Wert für die angesaugte Luftmasse $m_L$, dem Wert für die Temperatur am Verdichtereintritt $T_{VE}$ und dem Wert für den Druck am Verdichtereintritt $P_{VE}$ nach folgender Berechnungsformel:

$$m_{Lkor} = m_L \cdot ((T_{VE}+273{,}15K)/T_{OV})^{0{,}5}/(p_{VE}/P_{OV})),$$

wobei $T_{OV}$ die Normtemperatur und $P_{OV}$ der Normdruck des Verdichterkennfeldes sind. Die Normbedingungen sind die Bedingungen, unter denen das Verdichterkennfeld erstellt wurde.

Aus dem im Datenspeicher 19 gespeicherten Verdichterkennfeld wird das dem ermittelten Wert für die angesaugte korrigierte Luftmasse am Verdichtereintritt $m_{Lkor}$ bei maximal zulässiger Verdichterdrehzahl $n_{Vmax}$ zuzuordnende maximal zulässige Ladedruckverhältnis $(p_L/P_{VE})_{max}$ aus Ladedruck $p_L$ zu Druck vor Verdichter $P_{VE}$ entnommen. Durch Multiplikation mit dem ermittelten Druck vor Verdichter $P_{VE}$ wird der für diesen Wert für den Luftmassendurchsatz bei diesem Turbolader 4 maximal zulässige Ladedruck $p_{Lmax}$ ermittelt.

Mit Hilfe eines im Datenspeicher 20 abgelegten vorbestimmten Korrekturfaktors $K_{PLLK}$ für den Ladedruckverlust zwischen Ladedruckmessung an der Position des Ladedrucksensors 17 und dem Verdichteraustritt direkt hinter dem Verdichter 5, insbesondere wegen des hohen Druckverlustes in dem Ladeluftkühler 3, erfolgt eine Korrektur des errechneten maximal zulässigen Ladedrucks $p_{Lmax}$ zu einem korrigierten maximal zulässigen Ladedruck $p_{Lmaxkor}$ entsprechend der Gleichung

$$p_{Lmaxkor} = p_{Lmax} \cdot K_{PLLK} \text{ mit } K_{PLLK} = f(m_L).$$

Dieser ermittelte, korrigierte, maximal zulässige, von der Atmosphäre abhängige Ladedruck $p_{Lmaxkor}$ wird mit dem gemessenen Ladedruck $p_L$ verglichen.

Solange der Ladedruck $p_L$ kleiner als der maximal zulässige korrigierte Ladedruck $p_{Lmaxkor}$ ist, ist gemäß Verdichterkennfeld von Figur 3 die diesem Zustand entsprechende Verdichterdrehzahl $n_V$ kleiner als die maximal zulässige Verdichterdrehzahl $n_{Vmax}$. Ein Eingreifen in die Ladedruckregelung ist noch nicht erforderlich. Sobald der Ladedruck $p_L$ dem maximal zulässigen Ladedruck $p_{Lmaxkor}$ entspricht, erfolgt ein Eingreifen der Art, dass die Regelung momentan in diesem Zustand keine Ladedruckerhöhung mehr zulässt.

In einer weiteren Ausführung ist es möglich, kurzfristigem Überdrehen aufgrund von durch dynamische Vorgänge erzeugten Ladedruckspitzen dadurch entgegenzuwirken, dass nach Errechnung des maximal zulässigen Druckverhältnisses $(P_L/P_{VE})_{max}$ oder nach Errechnung des die Druckverluste berücksichtigenden korrigierten, maximal zulässigen Ladedrucks $p_{Lmaxkor}$ eine den Gradienten der Laderdrehzahl über die Zeit berücksichtigende Korrektur des maximal zulässigen Druckverhältnisses durch Heranziehung eines im Datenspeicher 20 abgelegten vorbestimmten Korrekturparameters $K_n$ erfolgt, so dass ein korrigiertes, maximal zulässiges, die Drehzahlveränderungen des Laders berücksichtigendes Druckverhältnis $(P_L/P_{VE})_{maxn}$ ermittelt wird, welches beispielsweise der Gleichung

$$(P_L/P_{VE})_{maxn} = (P_L/P_{VE})_{max} - K_n$$

entspricht, wobei $K_n = f((P_{Lkor}/P_{VE}); m_{Lkor})$ zusätzlich gefiltert wird.

Der Gradient wird in der Berechnungseinheit 20 berechnet.

In Figur 1 ist der Luftdruck- und Lufttemperatursensor 14 in Strömungsrichtung dem Luftfilter 12 vorgeordnet. Der Luftdruck- und Lufttemperatursensor 14 kann ebenso an jeder anderen geeigneten Stelle zur Messung des Umgebungsluftdrucks bzw. der Umgebungstemperatur vorgesehen sein. Beispielsweise kann der Luftdruck und die Lufttemperatur in einer Position, die dem Luftfilter 12 nachgeordnet ist, gemessen werden.

Im Einzelfall kann es sinnvoll sein, bei Fahrzeugstillstand einen Abgleich des Ladedrucksensors auf den Umgebungsdrucksensor zur Toleranzreduzierung vorzunehmen.

**BEZUGSZEICHENLISTE**

1   Verbrennungsmotor
2   Saugrohr
3   Ladeluftkühler
4   Turbolader
5   Verdichter
6   Turbine
7   Luftführung
8   Luftführung
9   Luftführung
10  Luftmassenmesser
11  Luftführung
12  Luftfilter
13  Luftführung
14  Sensor für Luftdruck und Lufttemperatur
15  Abgasführung
16  Abgasführung
17  Sensor für Ladedruck und Ladelufttemperatur
18  Motorsteuergerät
19  Datenspeicher
20  Berechnungseinheit

**Patentansprüche**

1.  Verfahren zur Regelung einer Ladedruckbegrenzung eines Turboladers bei einem Verbrennungsmotor in Abhängigkeit von der Dichte der Umgebungsluft,

    - wobei nach vorgegebenen Zeitintervallen die ermittelten Größen für die Ist-Umgebungstemperatur $(T_\infty)$, für den Ist-Umgebungsdruck $(p_\infty)$, für die angesaugte Luftmasse $(m_L)$ und für den Ladedruck $(p_L)$ in diesem Betriebszustand ermittelt und aus diesen Größen über vorbestimmte luftmassenabhängige Korrekturkennlinien der Ist-Druck $(p_{VE})$ am Verdichtereintritt und die Ist-Temperatur $(T_{VE})$ am Verdichtereintritt ermittelt wird,

    - wobei aus ermitteltem Druck $(p_{VE})$ am Verdichtereintritt, aus ermittelter Temperatur $(T_{VE})$ am Verdichtereintritt und aus ermittelter angesaugter Luftmasse $(m_L)$ jeweils der auf Normbedingungen des Verdichters korrigierte Luftmassendurchsatz $(m_{Lkor})$ am Verdichtereintritt ermittelt wird,

    - wobei jeweils aus dem Verdichterkennfeld für die maximal zulässige Turboladerdrehzahl $(n_{Vmax})$ bei diesem auf Normbedingungen des Verdichters korrigierten Luftmassendurchsatz $(m_{Lkor})$ am Verdichtereintritt und dem ermittelten Umgebungsdruck $(p_\infty)$ der verdichterdrehzahlabhängige maximal zulässige Ladedruck $(p_{Lmaxkor})$ entnommen und mit dem in diesem Betriebszustand ermittelten Ladedruck $(p_{List})$ verglichen wird, und

    - wobei der Ladedruck so geregelt wird, dass der ermittelte Wert für den Ladedruck $(p_{List})$ jeweils maximal dem in diesem Zustand ermittelten verdichterdrehzahlabhängigen maximal zulässigen Ladedruck $(p_{Lmaxkor})$ entspricht.

2.  Verfahren zur Regelung gemäß den Merkmalen von Anspruch 1,

-   wobei die Temperatur ($T_{VE}$) aus der Ist-Umgebungstemperatur ($T_\infty$) am Verdichtereintritt und einem vorbestimmten luftmasseabhängigen Korrekturparameter für die Temperatur ($K_T$) und der Druck ($p_{VE}$) am Verdichtereintritt aus dem Ist-Umgebungsdruck ($p_\infty$) und einem vorbestimmten luftmasseabhängigen Korrekturparameter für den Ladedruck (Kp) und der korrigierte Luftmassendurchsatz ($m_{Lkor}$) am Verdichtereintritt aus Temperatur ($T_{VE}$) am Verdichtereintritt, Druck ($p_{VE}$) und angesaugter Luftmasse ($m_L$) nach folgender Beziehung ermittelt wird:

$$m_{Lkor} = m_L \cdot ((T_{VE}+273,15K)/T_{OV})^{0,5}/(p_{VE}/P_{OV})),$$

-   wobei Tov die Temperatur am Verdichtereintritt unter Normbedingungen des Verdichters und $P_{OV}$ der Druck am Verdichtereintritt unter Normbedingungen des Verdichters ist.

3.  Verfahren zur Regelung gemäß den Merkmalen von einem oder mehreren der vorangegangenen Ansprüche,

    -   wobei die Ist-Umgebungstemperatur ($T_\infty$), für den Ist-Umgebungsdruck ($p_\infty$), für die angesaugte Luftmasse ($m_L$) und für den Ladedruck ($p_{List}$) gemessen und zum Motorsteuergerät übermittelt werden,
    -   wobei im Motorsteuergerät das Verdichterkennfeld und die vorbestimmten Korrekturkennlinien zur Ermittlung von Ist-Druck ($p_{VE}$) am Verdichtereintritt und der Ist-Temperatur ($T_{VE}$) vorliegen und im Motorsteuergerät der Ist-Druck ($p_{VE}$) am Verdichtereintritt und die Ist-Temperatur ($T_{VE}$), der korrigierte Luftmassendurchsatz ($m_{LVE}$) am Verdichtereintritt und der verdichterdrehzahlabhängige maximal zulässige Ladedruck ($p_{Lmax}$) ermittelt und die Steuersignale zur Ladedruckregelung erzeugt werden.

4.  Verfahren zur Regelung gemäß den Merkmalen von einem oder mehreren der vorangegangenen Ansprüche,

    -   wobei der Ladedruck ($p_{List}$) in der Ladeluftführung zwischen einem Ladeluftkühler und der Brennkammer des Verbrennungsmotors gemessen wird,
    -   wobei beim Vergleich zwischen gemessenem Ladedruck ($p_{List}$) und dem jeweils hierzu ermittelten verdichterdrehzahlabhängigen maximal zulässigen Ladedruck ($p_{Lmax}$) eine Korrektur für den Druckverlust zwischen Verdichtereintritt und Messstelle für den Ladedruck erfolgt,

-   wobei diese Korrektur insbesondere dadurch erfolgt, dass ein korrigierter maximal zulässiger Ladedruck ($p_{Lmaxkor}$) mit einem vom Luftmassendurchsatz ($m_{LEV}$) am Verdichtereintritt abhängigen Korrekturkennlinie ermittelt wird und dann dieser korrigierte maximal zulässige Ladedruck ($p_{Lmaxkor}$) mit dem gemessenen Ladedruck ($p_L$) verglichen wird, wobei bevorzugt dieser korrigierte maximal zulässige Ladedruck ($p_{Lmaxkor}$) mittels vom gemessenen Luftmassendurchsatz ($m_L$) am Verdichtereintritt abhängigen Korrekturfaktor ($K_{PLLK}$) für den Ladedruckverlust zumindest im Ladeluftkühler nach der Gleichung

$$p_{Lmaxkor} = p_{Lmax} \cdot K_{PLLK} \text{ mit } K_{PLLK} = f(m_L)$$

ermittelt wird.

5.  Verfahren zur Regelung gemäß den Merkmalen von einem oder mehreren der vorangegangenen Ansprüche,

    -   wobei beim Vergleich zwischen gemessenem Ladedruck ($p_L$) und dem jeweils hierzu ermittelten verdichterdrehzahlabhängigen maximal zulässigen Ladedruck ($p_{Lmax}$) eine Korrektur zur Berücksichtigung eines dynamischen Anteils durch die Veränderungen der Motordrehzahl über der Zeit erfolgt,
    -   wobei diese Korrektur insbesondere dadurch erfolgt, dass ein korrigiertes maximal zulässiges Druckverhältnis (($P_L/P_{VE})_{maxn}$) mit einer vorbestimmten Korrekturfunktion ($K_n$) zur Berücksichtigung des Gradienten der Motordrehzahl (n) über der Zeit (t) ermittelt wird, und
    -   wobei bevorzugt dieses korrigierte maximal zulässige Druckverhältnis (($P_L/P_{VE})_{maxn}$) nach der Gleichung

$$(P_L/P_{VE})_{maxn} = (P_L/P_{VE})_{max} — K_n$$

mit $K_n = f((P_{Lkor}/P_{VE}); m_{Lkor})$ ermittelt wird.

6.  Verfahren zur Regelung gemäß den Merkmalen von einem oder mehreren der vorangegangenen Ansprüche,

    -   wobei bei einem Verdichter-Ansaugweg mit eingebautem Luftfilter die Ist-Umgebungstemperatur ($T_\infty$) und der Ist-Umgebungsdruck ($p_\infty$) in Strömungsrichtung der Ansaugluft gesehen vor dem Luftfilter gemessen wird.

7.  Verfahren zur Regelung gemäß den Merkmalen von einem oder mehreren der Ansprüche 1 bis 5,

- wobei bei einem Verdichter-Ansaugweg mit eingebautem Luftfilter und mit einem Luftmassenmesser der Ist-Umgebungsdruck $p_\infty$ in Strömungsrichtung der Ansaugluft gesehen nach dem Luftfilter und die Ist-Umgebungstemperatur ($T_\infty$) im Luftmassenmesser gemessen wird.

8. Verfahren zur Regelung gemäß den Merkmalen von einem oder mehreren der vorangegangenen Ansprüche,

    - wobei bei Fahrzeugstillstand ein Abgleich des Sensors zur Messung des Ladedrucks ($p_{List}$) auf den Sensor zur Messung des Ist-Umgebungsdrucks ($p_\infty$) erfolgt.

9. Verbrennungsmotor mit Abgasturbolader und mit einer Regeleinrichtung zur Regelung des Ladedrucks, bei der nach bestimmten Zeitintervallen jeweils der Ist-Ladedruck ermittelt und mit vorgegebenen Werten für den Soll-Ladedruck im jeweiligen Betriebszustand aus einem gespeicherten Verdichterkennfeld verglichen und eingeregelt wird, **dadurch gekennzeichnet,**

    - **dass** die Regeleinrichtung in Datenverbindung mit Mitteln zur Ermittlung von Umgebungstemperatur ($T_\infty$), von Umgebungsdruck ($p_\infty$) von angesaugter Luftmasse ($m_L$) und von Ladedruck ($p_{List}$) steht und Mittel zur Aufnahme dieser Daten in vorgegebenen Zeitintervallen aufweist,
    - **dass** die Regeleinrichtung in Datenverbindung steht mit einem Datenspeicher mit darin gespeicherten, vorbestimmten luftmasseabhängigen Korrekturparametern für den Ladedruck (Kp) und die Temperatur ($K_T$) am Verdichtereintritt des Turboladers und mit dem gespeicherten Verdichterkennfeld mit den für verschiedene Verdichterdrehzahlen ($n_V$) sowie den für die maximal zulässige Verdichterdrehzahl ($n_{Vmax}$) des Turboladers jeweils vorbestimmten Zusammenhang zwischen angesaugter Luftmasse ($m_L$) und dem Verhältnis aus Ladedruck zu Umgebungsdruck ($p_L/p_\infty$),
    - **dass** die Regeleinrichtung Mittel zur jeweiligen Ermittlung des Drucks ($p_{VE}$) am Verdichtereintritt aus dem ermittelten Umgebungsdruck ($p_\infty$) und der entsprechenden Korrektur ($K_p$) des Drucks ($p_{VE}$) am Verdichtereintritt und zur jeweiligen Ermittlung der Temperatur ($T_{VE}$) am Verdichtereintritt aus der ermittelten Umgebungstemperatur ($T_\infty$) und dem entsprechenden Korrekturparameter für die Temperatur ($K_T$), zur jeweiligen Ermittlung des Ist-Wertes für den korrigierten Luftmassendurchsatz ($m_{Lkor}$) am Verdichtereintritt aus ermittelter angesaugter Luftmasse ($m_L$), aus ermitteltem Druck ($p_{VE}$) am Verdichtereintritt und aus ermittelter Temperatur ($T_{VE}$) am Verdichtereintritt und zur Ermittlung des für diesen korrigierten Luftmassendurchsatz ($m_{Lkor}$) am Verdichtereintritt maximal zulässigen Ladedrucks ($p_{Lmax}$) aus dem Verdichterkennfeld aus der für diesen korrigierten Luftmassendurchsatz ($m_{Lkor}$) am Verdichtereintritt maximal zulässige Verdichterdrehzahl ($n_{Vmax}$) und aus dem ermittelten Umgebungsdruck ($p_\infty$) und zum jeweiligen Vergleich des ermittelten Ladedrucks ($p_{List}$) und des jeweils hierzu ermittelten verdichterdrehzahlabhängigen maximal zulässigen Ladedrucks ($p_{Lmax}$) aufweist, und
    - **dass** die Regeleinrichtung mit Mitteln zum Aufbau und zum Verändern des Ladedrucks verbunden ist und einen Regelmechanismus zur oberen Begrenzung des Ladedruckaufbaus aufweist, der auf die Mittel zum Aufbau und zum Verändern des Ladedrucks derartig einwirkt, dass der Ladedruck ($p_{List}$) diesen ermittelten verdichterdrehzahlabhängigen maximal zulässigen Ladedruck ($p_{Lmaxkor}$) nicht überschreitet.

10. Verbrennungsmotor gemäß den Merkmalen von Anspruch 5,

    - wobei die Regeleinrichtung und der Datenspeicher Teil des Motorsteuergeräts sind.

11. Motorsteuerungsgerät für einen Verbrennungsmotor mit Abgasturbolader mit einer Regeleinheit zur Regelung des Ladedrucks und einer Datenspeichereinheit, **dadurch gekennzeichnet,**

    - **dass** die Regeleinheit mit Mittel zur Datenaufnahme von Umgebungstemperatur ($T_\infty$), von Umgebungsdruck ($p_\infty$), von angesaugter Luftmasse ($m_L$) und von Ladedruck ($p_L$) in vorgegebenen Zeitintervallen ausgebildet ist,
    - **dass** die Regeleinheit in Datenverbindung zur Datenaufnahme steht mit einem Datenspeicher mit darin gespeicherten, vorbestimmten luftmasseabhängigen Korrekturparametern für den Ladedruck ($K_p$) und die Temperatur ($K_T$) am Verdichtereintritt des Turboladers und mit dem gespeicherten Verdichterkennfeld mit den für verschiedene Verdichterdrehzahlen ($n_V$) sowie den für die maximal zulässige Verdichterdrehzahl ($n_{Vmax}$) des Turboladers jeweils vorbestimmtem Zusammenhang zwischen angesaugter Luftmasse ($m_L$) und dem Verhältnis aus Ladedruck zu Umgebungsdruck ($p_L/p_\infty$),
    - **dass** die Regeleinheit Mittel zur jeweiligen Ermittlung des Drucks ($p_{VE}$) am Verdichtereintritt aus den aufgenommenen Daten für den ermittelten Umgebungsdruck ($p_\infty$) und dem entsprechenden Korrekturparameter für den Ladedruck ($K_p$) des Drucks ($p_{VE}$) am Verdichtereintritt und zur jeweiligen Ermittlung der Temperatur ($T_{VE}$) am Verdichtereintritt aus den aufgenommenen Daten für die ermittelte Umgebungstemperatur ($T_\infty$) und dem entsprechenden Korrekturparameter für die Temperatur ($K_T$), zur jeweiligen Ermittlung des Ist-Wertes für den korrigierten Luftmassendurchsatz ($m_{Lkor}$) am Verdichtereintritt aus den aufgenommenen Daten für die ermittelte angesaugte Luftmasse ($m_L$), aus ermitteltem Druck ($p_{VE}$) am Verdichtereintritt und aus ermittelter Temperatur ($T_{VE}$) am Verdichtereintritt und zur Ermittlung des für diesen korrigierten Luftmassendurchsatz ($m_{Lkor}$) am Verdichtereintritt maximal zulässigen Ladedrucks ($p_{Lmax}$) aus dem Verdichterkennfeld aus der für diesen korrigierten Luftmassendurchsatz ($m_{Lkor}$) am Verdichtereintritt maximal zulässige Verdichterdrehzahl ($n_{Vmax}$) und aus dem ermittelten Umgebungsdruck ($p_\infty$) und zum jeweiligen Vergleich des ermittelten Ladedrucks ($p_{List}$) und des jeweils hierzu ermittelten verdichterdrehzahlabhängigen maximal zulässigen Ladedrucks ($p_{Lmaxkor}$) aufweist, und

- **dass** die Regeleinheit eine Datenverbindung zur Datenübertragung von Regeldaten an Mittel zum Aufbau und zum Verändern des Ladedrucks aufweist und einen Regelmechanismus zur oberen Begrenzung des Ladedruckaufbaus aufweist, der solche Regeldaten erzeugt, die auf die Mittel zum Aufbau und zum Verändern des Ladedrucks derartig einwirken, dass der Ladedruck ($p_L$) diesen ermittelten verdichterdrehzahlabhängigen maximal zulässigen Ladedrucks ($p_{Lmaxkor}$) nicht überschreitet.

FIG.1

EP 1 256 702 A2

# FIG.2

## FIG. 3

$p_L/p_{VE}$

Druckverhältnis

$(p_L/p_{VE})_{max}$

$n_{vmax}$

$(p_L/p_{VE})_{max}$

n

n

$m_{Lkor}$

170000

n

$m_{Lkor}$

n

130000

n

90000

Korrigierter Luftdurchsatz $m_{Lkor}$ (Kg/s)